# EUROPÄISCHE PATENTSCHRIFT

(11) **EP 3 557 124 B1**
(45) Veröffentlichungstag und Bekanntmachung des Hinweises auf die Patenterteilung: **04.11.2020**
(21) Anmeldenummer: 19167728.5
(22) Anmeldetag: 08.04.2019
(51) Int. Cl.: F21V 3/02, F21V 8/00, F21K 9/61, F21S 8/04, F21V 15/01, F21Y 105/12, F21Y 105/16, F21Y 115/10

(54) **FLACHE LED-LEUCHTE**
FLAT LED LIGHT
LUMINAIRE À DEL PLAT

(30) Priorität: 19.04.2018 DE 202018102168 U
(43) Veröffentlichungstag der Anmeldung: 23.10.2019
(73) Patentinhaber: Zumtobel Lighting GmbH, 6850 Dornbirn (AT)
(72) Erfinder: Schwaighofer, Andreas, 6850 Dornbirnd (AT)
(74) Vertreter: Thun, Clemens

(56) Entgegenhaltungen:
- DE-T5-112013 006 614
- US-A1- 2007 171 678
- US-A1- 2017 254 487

## Beschreibung

Die Erfindung betrifft eine LED-Leuchte mit mehreren, in einer Ebene angeordneten LEDs und einer lichtdurchlässigen, zumindest in erster Näherung plattenförmigen Abdeckung, die parallel zu der Ebene orientiert ist.

Aus dem Stand der Technik ist eine derartige LED-Leuchte bekannt. Ein Problem hierbei besteht darin, dass der Randbereich der Abdeckung im Vergleich zum mittleren Bereich typischerweise weniger Licht erhält und dementsprechend bei Betrachtung von außen dunkler erscheint. Dies ist in der Regel unerwünscht.

Die DE 11 2013 006 614 T5 zeigt eine Beleuchtungsvorrichtung, welche auf einer Leiterplatte kreisförmig angeordnete LED-Lichtquellen aufweist, wobei das von den LED-Lichtquellen abgegebene Licht in einem Lichtleiter aufgeteilt wird und dadurch sowohl an einen Randbereich der Beleuchtungsvorrichtung als auch an einen Hauptbereich der Beleuchtungsvorrichtung abgegeben wird.

Ferner ist aus dem Stand der Technik eine LED-Leuchte bekannt, die einen plattenförmigen Lichtleiter aufweist, in den über eine der schmalen stirnseitigen Kantenbereiche Licht von LEDs eingestrahlt wird, wobei dieses Licht im Weiteren über eine der beiden großen Hauptflächen des Lichtleiters abgegeben wird. Hier ist allerdings aufgrund der Anordnung der LEDs ein entsprechend breiter bzw. voluminöser Randbereich erforderlich, der sich deutlich zur Seite über die Licht abgebende Fläche des Lichtleiters hinaus erstreckt. Hierdurch sind die Gestaltungsmöglichkeiten der Leuchte limitiert.

Der Erfindung liegt die Aufgabe zugrunde, eine entsprechende verbesserte Leuchte anzugeben. Insbesondere soll sich die Leuchte dazu eignen, derart gestaltet zu werden, dass sie - bei homogener Lichtabgabe - um die lichtabgebende Fläche herum lediglich einen sehr schmalen Randbereich geringer Bauhöhe aufweist.

Diese Aufgabe wird gemäß der Erfindung mit dem in dem unabhängigen Anspruch genannten Gegenstand gelöst. Besondere Ausführungsarten der Erfindung sind in den abhängigen Ansprüchen angegeben.

Gemäß der Erfindung ist eine Leuchte vorgesehen, die eine LED-Lichtquelle mit mehreren, in einer ersten Ebene angeordneten ersten LEDs zur Abstrahlung eines ersten Lichts und zweiten LEDs zur Abstrahlung eines zweiten Lichts aufweist, sowie eine lichtdurchlässige, zumindest in erster Näherung plattenförmige Abdeckung, durch die hindurch das erste Licht nach außen abgegeben wird, wobei sich die Abdeckung in einer, zu der ersten Ebene parallelen zweiten Ebene ausgerichtet erstreckt. Weiterhin weist die Leuchte einen Lichtleiter auf, der sich - in einem Querschnitt senkrecht zu der ersten Ebene betrachtet - ausgehend von einem Randbereich der Abdeckung schräg einwärts zu der LED-Lichtquelle hin erstreckt, derart, dass das zweite Licht durch eine, der LED-Lichtquelle zugewandte stirnseitige Endfläche des Lichtleiters in diesen einstrahlt und im Weiteren zumindest teilweise den Lichtleiter in Richtung Abdeckung verlässt und dann durch die Abdeckung hindurch nach außen abgegeben wird.

Durch den Lichtleiter lässt sich so viel Licht auf den Randbereich der Abdeckung lenken, dass eine homogene Lichtabgabe über die gesamte lichtabgebende Fläche der Abdeckung erzielbar ist. Dabei ist es möglich, die Leuchte so zu gestalten, dass der Rand der Abdeckung praktisch den Rand der Leuchte bildet; es muss insbesondere kein raumforderndes Bauteil, wie etwa eine LED-Lichtquelle seitlich von der Abdeckung angeordnet werden. Der Randbereich kann also mit einem besonders schmalen, sozusagen filigranen Rahmen gestaltet werden. Außerdem kann der Randbereich mit einer besonders geringen Erstreckung normal zu der ersten Ebene, also mit einer besonders geringen Höhe, gestaltet werden. Auch dies ist vorteilhaft mit Bezug auf die Gestaltungsmöglichkeiten der Leuchte. Insbesondere lässt sich hierdurch die Leuchte so gestalten, dass sie in ihrem äußeren Erscheinungsbild insgesamt besonders flach wirkt. Erfindungsgemäß sind die zweiten LEDs rahmenartig die ersten LEDs umfassend angeordnet.

Vorzugsweise ist der Lichtleiter sich zur Abdeckung hin vorwölbend geformt, so dass er einen, der Abdeckung zugewandten, gewölbten Oberflächenbereich aufweist. Dies ist besonders vorteilhaft mit Bezug auf die Erzielung einer möglichst homogenen Lichtabgabe über die Abdeckung.

Vorzugsweise weist der Lichtleiter Lichtauskoppelstrukturen auf, die derart gestaltet sind, dass das zweite Licht zumindest teilweise den Lichtleiter über den gewölbten Oberflächenbereich verlässt. Auch dies ist besonders vorteilhaft mit Bezug auf die Erzielung einer möglichst homogenen Lichtabgabe über die Abdeckung.

Vorzugsweise überragt - normal zu der ersten Ebene betrachtet - die Abdeckung die Anordnung der ersten LEDs und zweiten LEDs zumindest auf einer Seite, vorzugsweise auf allen Seiten. Hierdurch lässt sich erzielen, dass - bei gegebenem Abstand der Ebene der LEDs von der Abdeckung - der Randbereich der Leuchte an der betreffenden Seite mit einer besonders geringen Erstreckung normal zu der ersten Ebene, also mit einer besonders geringen Bauhöhe bzw. kurz Höhe gestaltet werden kann.

Vorzugsweise ist der Lichtleiter derart geformt, dass er sich - in dem Querschnitt betrachtet - in Richtung auf den Randbereich der Abdeckung zu verjüngt. Auch hierdurch lässt sich der betreffende Randbereich mit einer besonders geringen Höhe gestalten.

Vorzugsweise weist die Leuchte außerdem ein Reflektor-Element auf, das auf einer, der Abdeckung gegenüberliegenden Seite an den Lichtleiter angrenzend angeordnet ist oder auf dem Lichtleiter ausgebildet ist. Hierdurch lässt sich erzielen, dass praktisch kein Licht auf der betreffenden "Rückseite" des Lichtleiters austritt und im Weiteren die Leuchte nicht mehr über die Abdeckung verlässt. Dies ist vorteilhaft mit Bezug auf den lichttechnischen Wirkungsgrad der Leuchte.

Vorzugsweise sind die zweiten LEDs mit einer größeren örtlichen Dichte angeordnet als die ersten LEDs. Dies ist insbesondere in dem Fall, in dem jede der ersten LEDs ebenso viel Licht abgibt wie jede der zweiten LEDs, vorteilhaft. Auf diese Weise lässt sich besonders geeignet derart ausreichend viel Licht in den Lichtleiter einbringen, dass die gewünschte homogene Lichtabgabe über die Abdeckung bis in den Randbereich hinein gut erzielbar ist.

Vorzugsweise sind die ersten LEDs matrixartig angeordnet. Dies ist vorteilhaft mit Bezug auf eine homogene Lichtabgabe über den mittleren Bereich der Abdeckung.

Vorzugsweise ist der Lichtleiter derart gestaltet, dass er sich in einer dritten Ebene, die sich zwischen der ersten Ebene und der zweiten Ebene befindet, erstreckt, insbesondere ringartig geschlossen erstreckt. Hierdurch lässt sich der beschriebene Effekt über den ganzen Randbereich der Abdeckung hinweg erzielen, insbesondere wenn der Lichtleiter derart gestaltet ist, dass er geschlossen umlaufend an den gesamten Randbereich der Abdeckung angrenzt.

Herstellungstechnisch vorteilhaft ist der Lichtleiter aus mehreren Extrusions-Teilen zusammengesetzt gebildet.

Vorteilhaft weist die Leuchte weiterhin ein Rahmenelement auf, das in erster Näherung Pyramidenstumpf-artig geformt gestaltet ist, wobei das Rahmenelement mit einem ersten Randbereich, der an die Grundfläche der entsprechenden Pyramidenstumpfform angrenzt, mit der Abdeckung verbunden ist und mit einem hierzu gegenüberliegenden zweiten Randbereich die LED-Lichtquelle haltend gestaltet ist. Durch dieses Rahmenelement lässt sich besonders geeignet ein sehr schmaler, filigraner Randbereich der Abdeckung realisieren. Auf diese Weise kann eine quasi "rahmenlose" Abdeckung bzw. eine quasi "rahmenlose" Leuchte gestaltet werden.

Herstellungstechnisch vorteilhaft ist das Rahmenelement über eine Laserschweiß-Verbindung mit der Abdeckung verbunden.

Die Erfindung wird im Folgenden anhand eines Ausführungsbeispiels und mit Bezug auf die Zeichnungen näher erläutert. Es zeigen:
- Fig. 1: eine perspektivische Skizze einer anmeldungsgemäßen Leuchte,
- Fig. 2: eine Querschnitt-Skizze durch einen Randbereich der Leuchte und
- Fig. 3: eine Skizze zu einer möglichen Anordnung der LEDs der LED-Lichtquelle der Leuchte.

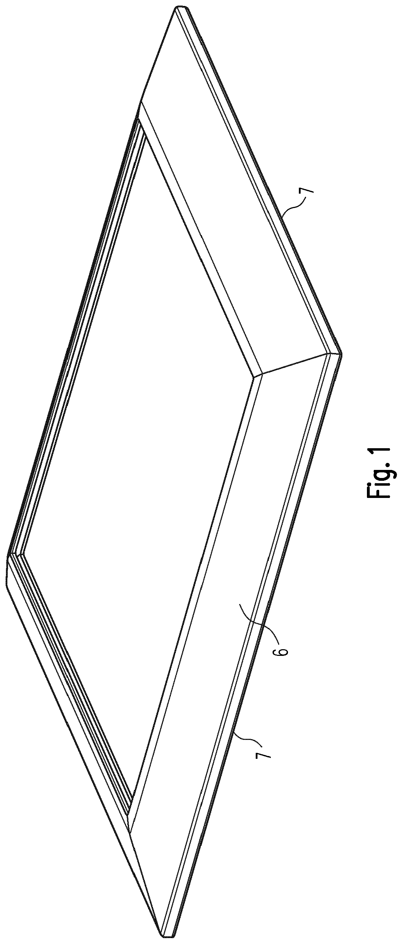

Fig. 1 zeigt eine perspektivische Skizze einer anmeldungsgemäßen Leuchte von schräg oben. In der vorliegenden Beschreibung wird von dieser Orientierung der Leuchte gegenüber der Vertikalen ausgegangen. Allerdings kann die Leuchte grundsätzlich zum Betrieb in einer anderen Orientierung verwendet werden.

Die Leuchte weist vorzugsweise ein Rahmenelement 6 auf, das in erster Näherung Pyramidenstumpf-artig gestaltet bzw. geformt ist. Im gezeigten Beispiel ist die Leuchte rechteckig gestaltet, so dass sie vier geradlinige Seitenrandabschnitte 7 aufweist. Diese vier Seitenrandabschnitte 7 entsprechen dabei den vier Seiten der rechteckigen Grundfläche der entsprechenden Pyramidenstumpf-Form.

Das Rahmenelement 6 kann herstellungstechnisch vorteilhaft aus vier einzelnen, profilartigen Rahmenteilen zusammengesetzt sein, die entsprechend auf Gehrung geschnitten und miteinander verbunden sind.

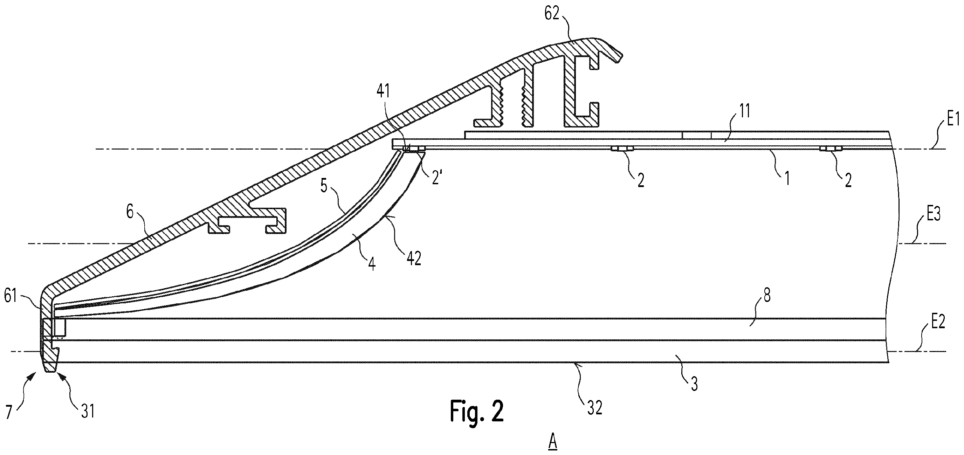

Fig. 2 zeigt eine Skizze eines Vertikalschnitts. Man erkennt das Rahmenelement 6 und den betreffenden Seitenrandabschnitt 7. In einem mittleren Bereich der Leuchte weist diese aufgrund der Pyramidenstumpf-Form des Rahmenelements 6 eine größere Höhe auf, als an den Seitenrandabschnitten 7.

Die Leuchte umfasst eine LED-Lichtquelle 1 mit mehreren ersten LEDs 2 zur Abstrahlung eines ersten Lichts und mit mehreren zweiten LEDs 2' zur Abstrahlung eines zweiten Lichts. Vorzugsweise sind die ersten LEDs 2 und die zweiten LEDs 2' auf einer Platine 11 der LED-Lichtquelle 1 angeordnet, die insbesondere eine plane, hier nach unten gerichtete Oberfläche aufweist, auf der die genannten LEDs 2, 2' angeordnet sind. Die ersten LEDs 2 und die zweiten LEDs 2' sind dabei in einer ersten Ebene E1 angeordnet. Die ersten LEDs 2 und die zweiten LEDs 2 ' können analog, vorzugsweise baugleich gestaltet sein.

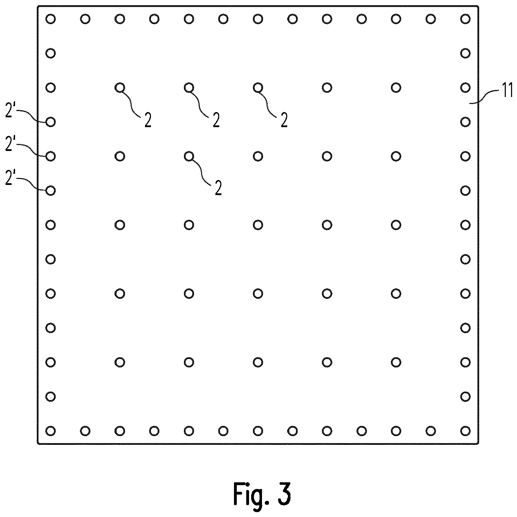

In Fig. 3 ist eine normale Sicht auf die plane Oberfläche der Platine 11 skizziert, auf der die ersten LEDs 2 und die zweiten LEDs 2' angeordnet sind. Gezeigt ist eine mögliche Gestaltung der Anordnung der genannten LEDs 2, 2'. Insbesondere können die ersten LEDs 2 matrixartig bzw. rasterförmig angeordnet sein, besonders bevorzugt gleichmäßig verteilt. Die zweiten LEDs 2' sind vorzugsweise mit einer größeren Dichte angeordnet als die ersten LEDs 2. Erfindungsgemäß sind die zweiten LEDs 2' - wie beispielhaft skizziert - rahmenartig die ersten LEDs 2 umfassend angeordnet. Vorzugsweise erstrecken sich die zweiten LEDs 2' entlang des Randes der Platine 11.

Weiter umfasst die Leuchte eine lichtdurchlässige, zumindest in erster Näherung plattenförmige Abdeckung 3, durch die hindurch das erste Licht nach außen abgegeben wird. Dabei erstreckt sich die Abdeckung 3 in einer zweiten Ebene E2, die zu der ersten Ebene E1 parallel orientiert ist. Bei der hier betrachteten Ausrichtung der Leuchte befindet sich die zweite Ebene E2 unterhalb der ersten Ebene E1.

Die Abdeckung 3 weist vorzugsweise eine, zumindest in erster Näherung plane Außenfläche 32 auf, die eine Außenfläche der Leuchte darstellt und über die das Licht von der Leuchte in einen Außenraum A, hier also nach unten, abgegeben wird.

Weiter umfasst die Leuchte einen Lichtleiter 4, der sich - in einem Querschnitt senkrecht zu der ersten Ebene E1 betrachtet, also entsprechend der Darstellung der Fig. 2 - ausgehend von einem Randbereich 31 der Abdeckung 3 schräg einwärts zu der LED-Lichtquelle 1 hin erstreckt. Dabei ist die Gestaltung derart, dass das zweite Licht durch eine, der LED-Lichtquelle 1 zugewandte stirnseitige Endfläche 41 des Lichtleiters 4 in diesen einstrahlt bzw. eintritt und im Weiteren zumindest teilweise den Lichtleiter 4 in Richtung Abdeckung 3 verlässt und dann durch die Abdeckung 3 hindurch nach außen abgegeben wird.

Hierdurch lässt sich erzielen, dass in besonders geeigneter Weise über den Randbereich der Abdeckung 3 Licht abgegeben wird. Im Vergleich zu dem eingangs genannten Stand der Technik lässt sich so vermeiden, dass bei Betrachtung der Abdeckung der Randbereich dunkler erscheint als ein mittlerer Bereich der Abdeckung. Es lässt sich mit Hilfe des Lichtleiters erzielen, dass die gesamte Außenfläche 32 der Abdeckung 3 quasi gleichmäßig hell erscheint.

Wie in Fig. 2 beispielhaft skizziert, kann der Lichtleiter 4 sich zur Abdeckung 3 hin vorwölbend geformt sein, so dass er einen, der Abdeckung 3 zugewandten, gewölbten Oberflächenbereich 42 aufweist. Der Lichtleiter 4 kann sozusagen bogenförmig gestaltet sein. Vorzugsweise weist der Lichtleiter 4 Lichtauskoppelstrukturen auf, die derart gestaltet sind, dass das zweite Licht zumindest teilweise den Lichtleiter 4 über den gewölbten Oberflächenbereich 42 verlässt. So lässt sich besonders geeignet über die gesamte Außenfläche 32 hinweg eine gleichmäßige Lichtabgabe bewirken. Vorzugsweise sind die Lichtauskoppelstrukturen dabei über die gesamte Länge des Lichtleiters 4 hinweg ausgebildet.

Wenn - wie im gezeigten Beispiel der Fall - die zweiten LEDs 2' mit einer größeren Dichte angeordnet sind als die ersten LEDs 2, lässt sich besonders geeignet bewirken, dass für die Erzielung der homogenen Lichtabgabe über die Abdeckung 3 ausreichend viel Licht über die stirnseitige Endfläche 41 in den Lichtleiter 4 eingestrahlt wird.

Vorzugsweise ist die Gestaltung der Leuchte derart, dass - normal zu der ersten Ebene E1 betrachtet - die Abdeckung 3 die Anordnung der ersten LEDs 2 und zweiten LEDs 2' zumindest auf einer Seite überragt. Mit Bezug auf die Darstellung der Fig. 2 erstreckt sich hier in diesem Sinn die Abdeckung 3 weiter nach links als die Anordnung der ersten und zweiten LEDs 2, 2'. So lässt sich erzielen, dass der Bereich um den entsprechenden Seitenrandabschnitt 7 der Leuchte mit einer deutlich geringeren Bauhöhe gestaltet werden kann als der mittlere Bereich. Dies ist vorteilhaft mit Bezug auf die Gestaltungsmöglichkeiten der Leuchte. Insbesondere lässt sich so ein insgesamt besonders flaches Erscheinungsbild der Leuchte bewirken.

Vorzugsweise ist der Lichtleiter 4 derart geformt, dass er sich - in dem Querschnitt senkrecht zu der ersten Ebene E1 betrachtet - in Richtung auf den Randbereich 31 der Abdeckung zu verjüngt. Auch dies trägt dazu bei, dass die Bauhöhe am Rand besonders klein gehalten werden kann.

Für eine besonders gleichmäßige Lichtabgabe kann die Leuchte weiter ein plattenförmiges optisches Element 8 aufweisen, das insbesondere parallel zu der Abdeckung 3 angeordnet ist, vorzugsweise die Abdeckung 3 kontaktierend. Dieses optische Element 8 ist hierzu vorzugsweise diffus wirkend gestaltet, es kann sich also um einen Diffusor handeln.

Vorzugsweise ist die Gestaltung der Leuchte derart, dass in dem Raum zwischen den ersten LEDs 2 einerseits und der Abdeckung 3 andererseits kein optisch wirksames Bauteil angeordnet ist.

Die Abdeckung 3 ist vorzugsweise so gestaltet, dass sie an allen Stellen, also insbesondere im Randbereich einerseits und im mittleren Bereich andererseits dieselben Eigenschaften mit Bezug auf ihre Lichtwirkung aufweist. Analoges gilt gegebenenfalls mit Bezug auf das optische Element 8.

Vorzugsweise ist die Gestaltung weiter so, dass das Rahmenelement 6 mit einem ersten Randbereich 61, der an die Grundfläche der entsprechenden Pyramidenstumpfform angrenzt - hier als mit dem unteren Randbereich - mit der Abdeckung 3 verbunden ist und mit einem hierzu gegenüberliegenden zweiten Randbereich 62 - hier also dem oberen Randbereich - die LED-Lichtquelle 1 haltend gestaltet ist. So lässt sich das Rahmenelement 6 besonders geeignet als tragendes Strukturelement der Leuchte gestalten.

Zur Verbindung zwischen dem Rahmenelement 6 und der Abdeckung 3 eignet sich besonders beispielsweise eine Laserschweiß-Verbindung.

Weiter weist die Leuchte ein Reflektor-Element 5 auf, das auf einer, der Abdeckung 3 gegenüberliegenden Seite an den Lichtleiter 4 angrenzend angeordnet ist oder auf dem Lichtleiter 4 ausgebildet ist, beispielsweise in Form einer reflektierenden Beschichtung. Hierdurch lässt sich vermeiden, dass ein Teil des zweiten Lichts den Lichtleiter 6 über dessen Oberfläche, die dem gewölbten Oberflächenbereich 42 gegenüberliegt, verlässt und so im Weiteren nicht mehr von der Leuchte über die Abdeckung 3 abgegeben werden kann. Mithin ist der Reflektor 5 vorteilhaft mit Bezug auf den lichttechnischen Wirkungsgrad der Leuchte.

Vorzugsweise ist der Lichtleiter 4 derart gestaltet, dass er sich in einer dritten Ebene E3, die sich zwischen der ersten Ebene E1 und der zweiten Ebene E2 befindet, erstreckt, insbesondere ringartig geschlossen erstreckt. Insbesondere ist die dritte Ebene E3 parallel zu der ersten Ebene E1 orientiert.

Vorzugsweise ist der Lichtleiter 4 derart gestaltet ist, dass er geschlossen umlaufend an den gesamten Randbereich 31 der Abdeckung 3 angrenzt. So lässt sich der vorteilhafte Effekt des Lichtleiters 4 über den gesamten Randbereich der Abdeckung 3 hinweg erzielen. Grundsätzlich kann aber auch vorgesehen sein, dass sich der Lichtleiter nur über einen Teil des Randbereichs erstreckt, zum Beispiel an lediglich einem Seitenrandabschnitt entlang oder lediglich auf zwei gegenüberliegenden Seiten entlang der betreffenden Seitenrandabschnitte.

Eine besonders geeignete Herstellungsmöglichkeit ergibt sich, wenn der Lichtleiter 4 aus mehreren, im gezeigten Beispiel aus vier Extrusions-Teilen zusammengesetzt gebildet ist. Besonders bevorzugt sind diese Extrusions-Teile dann entsprechend auf Gehrung geschnitten und miteinander verbunden, beispielsweise über eine Klebung.

Mit einer anmeldungsgemäßen Leuchte lässt sich besonders geeignet flächig und homogen Licht abgeben. Dabei lässt sich die Leuchte mit einem sehr schmalen, filigranen Randbereich gestalten. Die Abdeckung, über die die homogene Lichtabgabe erfolgt, kann sich bis unmittelbar an diesen Randbereich erstrecken. Die Leuchte lässt sich sozusagen quasi "rahmenlos" gestalten. Der Randbereich lässt sich mit einer besonders geringen Bauhöhe gestalten, die beispielsweise lediglich wenige Millimeter betragen kann. Die Leuchte lässt sich einfach in unterschiedlichen Längen gestalten.

## Patentansprüche

1. Leuchte, aufweisend
- eine LED-Lichtquelle (1) mit mehreren, in einer ersten Ebene (E1) angeordneten ersten LEDs (2) zur Abstrahlung eines ersten Lichts und zweiten LEDs (2') zur Abstrahlung eines zweiten Lichts,
- eine lichtdurchlässige, zumindest in erster Näherung plattenförmige Abdeckung (3), durch die hindurch das erste Licht nach außen abgegeben wird, wobei sich die Abdeckung (3) in einer, zu der ersten Ebene (E1) parallelen zweiten Ebene (E2) ausgerichtet erstreckt,
- einen Lichtleiter (4), der sich - in einem Querschnitt senkrecht zu der ersten Ebene (E1) betrachtet - ausgehend von einem Randbereich (31) der Abdeckung (3) schräg einwärts zu der LED-Lichtquelle (1) hin erstreckt, derart, dass das zweite Licht durch eine, der LED-Lichtquelle (1) zugewandte stirnseitige Endfläche (41) des Lichtleiters (4) in diesen einstrahlt und im Weiteren zumindest teilweise den Lichtleiter (4) in Richtung Abdeckung (3) verlässt und dann durch die Abdeckung (3) hindurch nach außen abgegeben wird,
**dadurch gekennzeichnet,**
**dass** die zweiten LEDs (2') rahmenartig die ersten LEDs (2) umfassend angeordnet sind.

2. Leuchte nach Anspruch 1,
**dadurch gekennzeichnet,**
**dass** der Lichtleiter (4) sich zur Abdeckung (3) hin vorwölbend geformt ist, so dass er einen, der Abdeckung (3) zugewandten, gewölbten Oberflächenbereich (42) aufweist.

3. Leuchte nach Anspruch 2,
**dadurch gekennzeichnet,**
**dass** der Lichtleiter (4) Lichtauskoppelstrukturen aufweist, die derart gestaltet sind, dass das zweite Licht zumindest teilweise den Lichtleiter (4) über den gewölbten Oberflächenbereich (42) verlässt.

4. Leuchte nach einem der vorhergehenden Ansprüche,
**dadurch gekennzeichnet,**
**dass** - normal zu der ersten Ebene (E1) betrachtet - die Abdeckung (3) die Anordnung der ersten LEDs (2) und zweiten LEDs (2') zumindest auf einer Seite überragt, vorzugsweise auf allen Seiten überragt.

5. Leuchte nach einem der vorhergehenden Ansprüche,
**dadurch gekennzeichnet,**
**dass** der Lichtleiter (4) derart geformt ist, dass er sich - in dem Querschnitt betrachtet - in Richtung auf den Randbereich (31) der Abdeckung (3) zu verjüngt.

6. Leuchte nach einem der vorhergehenden Ansprüche,
**gekennzeichnet durch**
ein Reflektor-Element (5), das auf einer, der Abdeckung (3) gegenüberliegenden Seite an den Lichtleiter (4) angrenzend angeordnet ist oder auf dem Lichtleiter (4) ausgebildet ist.

7. Leuchte nach einem der vorhergehenden Ansprüche,
**dadurch gekennzeichnet,**
**dass** die zweiten LEDs (2') mit einer größeren örtlichen Dichte angeordnet sind als die ersten LEDs (2).

8. Leuchte nach einem der vorhergehenden Ansprüche,
**dadurch gekennzeichnet,**
**dass** die ersten LEDs (2) matrixartig angeordnet sind.

9. Leuchte nach einem der vorhergehenden Ansprüche,
**dadurch gekennzeichnet,**
**dass** der Lichtleiter (4) derart gestaltet ist, dass er sich in einer dritten Ebene (E3), die sich zwischen der ersten Ebene (E1) und der zweiten Ebene (E2) befindet, erstreckt, insbesondere ringartig geschlossen erstreckt.

10. Leuchte nach einem der vorhergehenden Ansprüche,
**dadurch gekennzeichnet,**
**dass** der Lichtleiter (4) derart gestaltet ist, dass er geschlossen umlaufend an den gesamten Randbereich (31) der Abdeckung (3) angrenzt.

11. Leuchte nach einem der vorhergehenden Ansprüche,
**dadurch gekennzeichnet,**
**dass** der Lichtleiter (4) aus mehreren Extrusions-Teilen zusammengesetzt gebildet ist.

12. Leuchte nach einem der vorhergehenden Ansprüchen,
**gekennzeichnet durch**
ein Rahmenelement (6), das in erster Näherung Pyramidenstumpf-artig geformt gestaltet ist, wobei das Rahmenelement (6) mit einem ersten Randbereich (61), der an die Grundfläche der entsprechenden Pyramidenstumpfform angrenzt, mit der Abdeckung (3) verbunden ist und mit einem hierzu gegenüberliegenden zweiten Randbereich (62) die LED-Lichtquelle (1) haltend gestaltet ist.

13. Leuchte nach Anspruch 12,
**dadurch gekennzeichnet,**
**dass** das Rahmenelement (6) über eine Laserschweiß-Verbindung mit der Abdeckung (3) verbunden ist.

## Claims

1. A lamp, having
- an LED light source (1) with several first LEDs (2) arranged in a first plane (E1) for the emission of a first light and second LEDs (2') for the emission of a second light,
- a light permeable, at least in first approximation plate-shaped cover (3), through which the first light is emitted to the outside, wherein the cover (3) extends aligned in a second plane (E2) parallel to the first plane (E1),
- a light guide (4), which - when viewed in a cross section perpendicular to the first plane (E1) - extends starting from an edge region (31) of the cover (3) obliquely inwards towards the LED light source (1), in such a manner, that the second light radiates through an end-face end surface (41) of the light guide (4) facing the LED light source (1) into said light guide and, in addition, at least partially leaves the light guide (4) in the direction of the cover (3) and then is emitted to the outside through the cover (3),
**characterized in**
**that** the second LEDs (2') are arranged in a frame-like manner comprising the first LEDs (2).

2. The lamp according to claim 1,
**characterized in**
**that** the light guide (4) is formed protruding towards the cover (3), so that it has a curved surface region (42) facing the cover (3).

3. The lamp according to claim 2,
**characterized in**
**that** the light guide (4) has light decoupling structures, which are designed in such a manner that the second light at least partially leaves the light guide (4) via the curved surface region (42).

4. The lamp according to any one of the preceding claims,
**characterized in**
**that** - when viewed perpendicular to the first plane (E1) - the cover (3) projects beyond the arrangement of the first LEDs (2) and second LEDs (2') at least on one side, preferably projects beyond said arrangement on all sides.

5. The lamp according to any one of the preceding claims,
**characterized in**
**that** the light guide (4) is formed in such a manner that - when viewed in the cross section - it tapers in the direction toward the edge region (31) of the cover (3).

6. The lamp according to any one of the preceding claims,
**characterized by**
a reflector element (5), which is arranged adjoining the light guide (4) on a side opposite the cover (3) or is formed on the light guide (4).

7. The lamp according to any one of the preceding claims,
**characterized in**
**that** the second LEDs (2') are arranged with a greater local density than the first LEDs (2).

8. The lamp according to any one of the preceding claims,
**characterized in**
**that** the first LEDs (2) are arranged like a matrix.

9. The lamp according to any one of the preceding claims,
**characterized in**
**that** the light guide (4) is designed in such a manner that it extends in a third plane (E3), which is located between the first plane (E1) and the second plane (E2), in particular, extends in a ring-like closed manner.

10. The lamp according to any one of the preceding claims,
**characterized in**
**that** the light guide (4) is designed in such a manner that it adjoins the entire edge region (31) of the cover (3) in a closed circumferential manner.

11. The lamp according to any one of the preceding claims,
**characterized in**
**that** the light guide (4) is formed composed of several extrusion parts.

12. The lamp according to any one of the preceding claims,
**characterized by**
a frame element (6), which is designed formed in first approximation like a truncated pyramid, wherein the frame element (6) with a first edge region (61), which adjoins the base surface of the corresponding truncated pyramid shape, is connected to the cover (3) and is designed with a second edge region (62) opposite thereto holding the LED light source (1).

13. The lamp according to claim 12,
**characterized in**
**that** the frame element (6) is connected to the cover (3) via a laser welding connection.

## Revendications

1. Luminaire, comportant
- une source de lumière LED (1) avec plusieurs premières LEDs (2) disposées dans un premier plan (E1) et destinées à l'émission d'une première lumière, et des deuxièmes LEDs (2') destinées à l'émission d'une deuxième lumière,
- une couverture (3) transparente, en forme de plaque au moins en première approximation, à travers laquelle la première lumière est émise vers l'extérieur, la couverture (3) s'étendant en étant orientée dans un deuxième plan (E2) parallèle au premier plan (E1),
- un conducteur de lumière (4) qui - vu en section transversale perpendiculairement au premier plan (E1) - s'étend à partir d'une zone de bord (31) de la couverture (3) obliquement vers l'intérieur en direction de la source de lumière LED (1) de telle sorte que, à travers une surface extrême (41), côté frontal, tournée vers la source de lumière LED (1), du conducteur de lumière (4), la deuxième lumière rayonne dans celui-ci et quitte ensuite au moins partiellement le conducteur de lumière (4) en direction de la couverture (3) et puis est délivrée vers l'extérieur à travers la couverture (3),
**caractérisé en ce que**
les deuxièmes LEDs (2') sont disposées en englobant les premières LEDs (2) à la façon d'un cadre.

2. Luminaire selon la revendication 1,
**caractérisé en ce que**
le conducteur de lumière (4) est formé de façon protubérante vers la couverture (3) de telle sorte qu'il comporte une zone superficielle (42) bombée tournée vers la couverture (3).

3. Luminaire selon la revendication 2,
**caractérisé en ce que**
le conducteur de lumière (4) comporte des structures de découplage de lumière qui sont constituées de telle sorte que la deuxième lumière quitte au moins partiellement le conducteur de lumière (4) via la zone superficielle (42) bombée.

4. Luminaire selon l'une des revendications précédentes,
**caractérisé en ce que**
- vue perpendiculairement au premier plan (E1) - la couverture (3) surplombe au moins d'un côté, de préférence de tous les côtés, l'ensemble des premières LEDs (2) et deuxièmes LEDs (2').

5. Luminaire selon l'une des revendications précédentes,
**caractérisé en ce que**
le conducteur de lumière (4) est formé de telle sorte que - vu en section transversale - il se rétrécit en direction de la zone de bord (31) de la couverture (3).

6. Luminaire selon l'une des revendications précédentes,
**caractérisé par**
un élément réflecteur (5) qui est disposé sur un côté opposé à la couverture (3) en jouxtant le conducteur de lumière (4), ou qui est constitué sur le conducteur de lumière (4).

7. Luminaire selon l'une des revendications précédentes,
**caractérisé en ce que**
les deuxièmes LEDs (2') sont disposées avec une densité locale plus élevée que les premières LEDs (2).

8. Luminaire selon l'une des revendications précédentes,
**caractérisé en ce que**
les premières LEDs (2) sont disposées à la façon d'une matrice.

9. Luminaire selon l'une des revendications précédentes,
**caractérisé en ce que**
le conducteur de lumière (4) est constitué de telle sorte qu'il s'étend dans un troisième plan (E3) qui se trouve entre le premier plan (E1) et le deuxième plan (E2), en particulier qu'il s'étend de façon fermée en anneau.

10. Luminaire selon l'une des revendications précédentes,
**caractérisé en ce que**
le conducteur de lumière (4) est formé de telle sorte qu'il jouxte l'ensemble de la zone de bord (31) de la couverture (3) en étant fermé sur son pourtour.

11. Luminaire selon l'une des revendications précédentes,
**caractérisé en ce que**
le conducteur de lumière (4) est formé d'une façon composée de plusieurs pièces d'extrusion.

12. Luminaire selon l'une des revendications précédentes,
**caractérisé par**
un élément de cadre (6) qui est constitué sous une forme de pyramide tronquée en première approximation, l'élément de cadre (6) étant raccordé à la couverture (3) par une première zone de bord (61) qui jouxte la surface de base de la forme de pyramide tronquée correspondante et étant constitué en retenant la source de lumière LED (1) avec une deuxième zone de bord (62) qui est opposée à la couverture.

13. Luminaire selon la revendication 12,
**caractérisé en ce que**
l'élément de cadre (6) est raccordé à la couverture (3) par le biais d'un assemblage par soudage laser.
